# EUROPEAN PATENT SPECIFICATION

(11) **EP 4 409 155 B1**
(45) Date of publication and mention of the grant of the patent: **29.10.2025**
(21) Application number: 22793228.2
(22) Date of filing: 28.09.2022
(51) Int. Cl.: F16D 66/00, G01L 5/28, G01M 13/028, F16D 65/00, B60T 17/22

(54) **METHOD FOR IDENTIFYING AND CHARACTERIZING, BY USING ARTIFICIAL INTELLIGENCE, NOISES GENERATED BY A VEHICLE BRAKING SYSTEM**
VERFAHREN ZUR IDENTIFIKATION UND CHARAKTERISIERUNG VON DURCH EIN FAHRZEUGBREMSSYSTEM ERZEUGTEN GERÄUSCHEN DURCH DEN EINSATZ KÜNSTLICHER INTELLIGENZ
PROCÉDÉ D'IDENTIFICATION ET DE CARACTÉRISATION, PAR L'UTILISATION DE L'INTELLIGENCE ARTIFICIELLE, DES BRUITS GÉNÉRÉS PAR UN SYSTÈME DE FREINAGE DE VÉHICULE

(30) Priority: 30.09.2021 IT 202100025013
(43) Date of publication of application: 07.08.2024
(73) Proprietor: Brembo S.p.A., 24035 Curno (Bergamo) (IT)
(72) Inventor: BENETTI, Danilo, 24035 Curno, Bergamo (IT); MAZZOLENI, Elena, 24035 Curno, Bergamo (IT); RESCATI, Micael, Curno, Bergamo (IT); GRILLI, Pietro Andrea, 24035 Curno, Bergamo (IT); MALMASSARI, Cristian, 24035 Curno, Bergamo (IT); CERUTTI, Andrea, 24035 Curno, Bergamo (IT)
(74) Representative: Brunazzi, Stefano
(86) International application number: PCT/IB2022/059229
(87) International publication number: WO 2023/053024

(56) References cited:
- DE-A1- 102015 105 729
- DE-A1- 102017 200 516
- DE-B3- 102015 203 332

## Description

### TECHNOLOGICAL BACKGROUND OF THE INVENTION

### Field of application.

The present invention refers to a method for identifying and characterizing, through the use of artificial intelligence (Al), noises generated by a vehicle braking system.

The present invention also relates to a method based on artificial intelligence (Al) for analyzing the noise produced during dynamometric testing of automotive brake systems.

### Description of the prior art.

Nowadays, ride comfort is one of the critical aspects in evaluating a vehicle.

In particular, in the automotive industry, customer complaints regarding so-called NVH (noise, vibration, harshness) aspects related to the brake system are a serious problem.

For this reason, it is essential to understand, starting from the design phase of a braking system, the phenomena related to the generation of undesired vibration and noise, to prevent them from happening.

Since the physics of friction-induced vibrations (FIV) is very complex and characterized by highly nonlinear and multiscale phenomena, there are no analytical mathematical theories capable of comprehensively predicting the behavior of a system regarding the above.

Therefore, much of the research and analysis in this field, in both industrial and non-industrial environments, is conducted experimentally. A large amount of data is collected by testing the braking system under controlled conditions and recording its response as input parameters change.

To measure noise generation during the development stages, braking systems are tested on a dynamometric (or roller stand) test bench, in which a predefined braking sequence is applied.

The noise is measured during a test usually employing a noise analyzer installed on the test bench. A standard noise analyzer identifies noise events based on amplitude criteria and known Fourier transform-based spectral processing methods. This implies that such noise analyzers are designed to recognize "tonal noise", i.e., events characterized by very narrow frequency bands. An example of tonal noise is squeal, i.e., a type of noise characterized by a spectrum with a narrow frequency band and a very high amplitude relative to the background (typically with an intensity more than 50 dB greater than the background).

The noise analyzer typically generates as a result a file containing information about the squeals it has identified (braking event number, presence or absence of squeals, time markers, frequency, sound pressure, duration, and so on).

However, due to the possible simultaneous presence of several different FIV phenomena, other types of noise may also be produced during a test, among which we can mention for example:
- collision noise (also called "clang"), i.e., an instantaneous pulse covering a wide range of frequencies caused by collision phenomena between components;
- chirp/wirebrush, i.e., many short pulses of noise at different frequencies;
- artifacts, i.e., noise events with a wide frequency band and high intensity.

Known noise analyzers recognize these types of noise (whose spectral characteristics differ significantly from those of squeals) with difficulty, or unreliably, and on the other hand sometimes mistakenly identify other types of noise as squeals.

Furthermore, the effectiveness of the detection and classification achievable by a noise analyzer is severely limited by the noise inherent in the test environment itself. This situation can lead to the detection of both false positives (FP), i.e., squeals detected when in fact there are none, and false negatives (FN), i.e., squeals that occur but are not detected.

While it is well known that the output of a noise analyzer is only partially reliable, it is known on the other hand that engineers experienced in noise and vibration can classify the different types of noise based on a spectrogram generated from sound measurements.

A spectrogram is a diagram in which noise data (measured frequency, time of occurrence, and sound intensity) are translated into an image.

Thus, the possibility is known to transform audio tracks into spectrograms that contain an equivalent level of information.

Based on this, methods have been suggested to interpret the information in a spectrogram using machine learning (ML) algorithms.

These techniques employ training techniques which start from known data available in the form of spectrograms, in which known noise events are highlighted, with each of which information about the known type of noise is associated.

Despite the progress in this field, including the application of ML algorithms for the interpretation of spectrograms, many unsolved problems and unmet needs remain, given the technical complexity of the problem, in particular the difficulty in detecting, recognizing, and discriminating the vast plurality of noises that can actually be generated due to many different causes.

Firstly, it must be noted that the distinction between different noise classes is not always clear, even to an expert in the field. For example, it can be difficult to discriminate a chirp from a series of very short little squeals even by applying an ML algorithm on a spectrogram. Even a squeal at a certain frequency does not necessarily have a constant intensity, and this results in a change of color on the spectrogram. When a squeal has a consistent variation in intensity, it becomes difficult to understand visually whether it is a single event or several distinct events, separate from each other, which follow one another rapidly.

In the aforesaid known solutions, single-frequency squeals are always classified as single events, regardless of intensity modulation, which can lead to incorrect assessments.

Additionally, on a spectrogram, the fundamental frequency of a squeal may be accompanied by higher-order harmonics, i.e., noise events similar to the original squeal in terms of shape on the spectrogram and appear at multiple frequencies of the fundamental frequency of squeal, with decreasing intensities. The known noise analyzers often incorrectly classify such higher-order harmonics as if they were independent squeals when they should be discriminated and excluded from the analysis, and preferably recognized and classified as a separate category.

Furthermore, another issue not addressed by known methods, yet critical when testing, is the treatment of low-frequency (<500 Hz) noise events. Indeed, it is within the norm for a spectrogram to exhibit low-frequency noise, often very intense, attributable to the test environment.

As the color scale of the spectrogram is normalized to the maximum and minimum intensities detected in the time interval analyzed, i.e., it is a relative scale, low-frequency noise events can distort the color scale, thus attenuating the visualization of events of interest at higher frequencies, and decreasing the effectiveness of the noise recognition and classification algorithm.

Finally, another important aspect not addressed in known solutions (even those employing ML algorithms) relates to the recognition of noise categories indicating anomalies. In particular, an anomaly may relate to a poor experimental arrangement (e.g., inaccurate installation of certain elements on the dynamometric bench) or a poor design of the brake system (e.g., pads hitting the brake caliper during a braking action). On the other hand, it would be very desirable to be able to recognize and classify noises associated with anomalies, e.g., to generate appropriate anomaly warning signals during the test.

Thus, as shown above, many unmet needs remain in the area of recognition and classification of noise generated by a braking system, to which the solutions known to date do not provide fully satisfactory solutions. The German Patent Publication DE 10 2017 200 516 A1 discloses a method for analysing brake noises including the steps of detecting brake noises, generating digital audio data representative of the detected noise and analysing said audio data by a noise analyser.

### SUMMARY OF THE INVENTION

The present invention, therefore, relates to a method based on artificial intelligence (AI) for improving the quality of the analysis noise produced during dynamometric testing of automotive brake systems.

In particular, it is the object of the present invention to provide a method for identifying and characterizing, by using artificial intelligence, of characterizing noises generated by a vehicle braking system, which makes it possible to solve, at least in part, the drawbacks described above with reference to the prior art and to respond to the aforesaid needs particularly felt in the considered technical sector. Said object is achieved by a method according to claim 1.

Further embodiments of such a method are defined in claims **2-24.**

### BRIEF DESCRIPTION OF THE DRAWINGS

Further features and advantages of the method according to the invention will become apparent from the following description of preferred exemplary embodiments, given by way of non-limiting indication, with reference to the accompanying drawings, in which:
- figure 1 shows six examples of spectrograms with the identification of different types or categories of noise recognizable by the method according to the invention;
- figure 2 shows a further example of a spectrogram with the identification of an additional noise category, recognizable by the method according to the invention;
- figure 3 and 4 are simplified block diagrams, which illustrate some steps comprised in an embodiment of the method;
- figures 5-7 show examples of spectrograms used in embodiments of the method;
- figure 8 shows a spectrogram in which a tagging operation was performed;
- figure 9 shows a block chart, which illustrates an embodiment of the method according to the invention;
- figure 10 shows four precision-recall diagrams related to four different types of noise recognizable by the method;
- figure 11 shows a simplified block diagram of a system capable of performing the method according to the invention.

### DETAILED DESCRIPTION

A method for identifying and characterizing noises generated by a vehicle braking system is described.

The method first comprises the steps of detecting noises generated by a vehicle braking system under dynamic operating conditions and generating digital audio data representative of the detected noise.

The method then provides analyzing the aforesaid digital audio data by a noise analyzer, to identify potential squeal events and the respective likely squeal frequencies, and generating squeal frequency information indicative of the squeal frequencies of the identified potential squeal events.

The method then comprises the steps of filtering the aforesaid digital audio data by means of high-pass filtering to eliminate spectral components at frequencies lower than a filtering frequency, to generate filtered digital audio data; and generating, based on the filtered digital audio data, a respective spectrogram, which represents, in graphical form, information present in the filtered digital audio data, comprising the sound signal intensity, as a function of time and frequency.

The method then involves providing the aforesaid spectrogram and the aforesaid squeal frequency information to a trained algorithm, wherein the algorithm was trained using artificial intelligence and/or machine learning techniques.

The method also provides identifying noise events, by the trained algorithm, based on the above spectrogram and squeal frequency information, classifying the identified noise events and finally providing information about the identified noise events, each characterized by the respective category.

The aforesaid classification step involves a classification according to at least the following categories: a first category comprising noises to be detected generated by the characteristic dynamic operation of the braking system; and a second category comprising abnormal noises, generated by operational or test anomalies.

According to an embodiment of the method, the aforesaid categories in which the noises are classified further comprise a third category comprising higher-order harmonics not deriving from physically generated noises.

According to an embodiment, the aforesaid first category of noises comprises squeal noises and/or chirp/wirebrush noises and/or artifacts, i.e., noises having wide bandwidth in frequency and high intensity.

According to an implementation option of the aforesaid embodiment, the step of classifying the identified noise events further comprises recognizing and further classifying the noises in the first category as belonging to one of the following sub-categories: squeal noises, chirp/wirebrush noises, artifacts.

According to an embodiment of the method, the aforesaid step of classifying the identified noise events further comprises recognizing and further classifying the noises in the second category as belonging to one of the following sub-categories: abnormal noise due to imperfections of the experimental bench ("bench noise"), or noises due to collisions ("clang noise") between brake system components.

According to an embodiment of the method, the dynamic operating conditions of the braking system from which the noises are derived are test conditions, wherein a sequence of predefined test braking events characterized by predefined parameters is applied to the braking system, said predefined parameters comprising at least a predefined rotational speed and/or a predefined braking pressure.

In this case, the steps of the method, shown above, are performed at each test braking event.

According to an embodiment of the method, the aforesaid trained algorithm is an algorithm trained by means of a preliminary step of training, based on a training dataset comprising spectrograms corresponding to known conditions and characterized according to the aforesaid classification of noise into categories and/or sub-categories, desired as a result of the analysis. In this case, the aforesaid spectrograms of the training dataset and further information about the known classification of each noise event are provided as input to the algorithm to be trained.

According to an implementation option, the aforesaid step of preliminary training comprises: tagging or labeling the known noise events present in each of the training spectrograms; and then calibrating the parameters of the algorithm to be trained based on the training spectrograms processed by tagging or labeling.

According to an implementation example, the spectrograms are not altered during the "tagging" process, which instead involves the generation of additional "accompanying" data.

According to an implementation option, the aforesaid step of tagging or labeling is performed manually by drawing a rectangle on a pattern of the training spectrogram identified as a noise event and associating the rectangle with a label indicating the category and/or sub-category of the noise event, referred to the aforesaid classification.

According to another implementation option, the aforesaid step of tagging or labeling is carried out with the support of an enabling software (such as "labellmg").

According to another implementation option, the aforesaid step of tagging or labeling is supported by listening to an audio file representative of the detected noise.

According to an implementation option, the method comprises the further step of verifying the predictive capabilities of the trained algorithm on an additional dataset of tagged validation spectrograms.

According to an embodiment of the method, the aforesaid trained algorithm is a machine learning algorithm based on neural networks.

According to possible options of implementation, the aforesaid neural networks comprise deep neural networks, or convolutional neural networks, or zoned convolutional neural networks or Region-Based Convolutional Neural Networks.

According to another embodiment of the method, the aforesaid trained algorithm is a machine learning algorithm based on Deep Object Detectors or Two-Stage Deep Object Detectors.

According to an embodiment, the method comprises, in addition to the step of generating a spectrogram, the further step of generating a segmented spectrogram, in which the points are graphically highlighted in dependence of an intensity band to which they belong, within a plurality of intensity bands delimited by respective predetermined thresholds.

In this case, the spectrogram is provided to the trained algorithm as an additional input, in addition to the unsegmented spectrogram and information on probable squeal frequencies.

According to an implementation option, the aforesaid intensity bands, for which points are highlighted in a respective manner, comprise a high-intensity band, inferiorly delimited by a first threshold, a medium-intensity band, between the first threshold and a second threshold, below the first threshold, and a low-intensity band, below the second threshold.

According to a particular example of implementation, the first threshold is set at 50 dB, and the second threshold is set at 30 dB.

According to an embodiment of the method, the aforesaid step of generating digital audio data representative of the detected noise comprises generating files and/or audio tracks acquired while performing the test on the braking system.

According to a particular example of implementation, audio tracks are in .wav or .mpeg format.

According to an embodiment of the method, the aforesaid step of analyzing digital audio data comprises: identifying noise events, and among them the squeal events, based on criteria associated with the intensity or amplitude and/or based on criteria associated with frequency by means of spectral methods, such as the Fourier transform; then generating, by the noise analyzer, a first data file in tabular form in which there are recorded all the potential squeal events identified by the noise analyzer and, for each squeal event, the time instant in which it occurred, the duration, the respective squeal frequency, the maximum and/or average sound pressure and/or amplitude and/or sound intensity of the time instant.

In this case, the aforesaid squeal frequency information is obtained by the aforesaid first data file in tabular form.

According to an implementation option, the aforesaid filtering frequency, in the step of filtering the digital audio data by high-pass filtering, is 500 Hz.

According to an embodiment of the method, the aforesaid step of providing information about the identified squeal events comprises generating, based on the results of the processing by trained algorithm, a second data file in tabular form in which there are recorded all the squeal events identified by the trained algorithm and, for each squeal event, the time instant in which it occurred, the duration, the respective squeal frequency, the maximum and/or average sound pressure and/or amplitude and/or sound intensity of the time instant.

According to an option of implementation of the method, the aforesaid second data file in tabular form is a refinement of the aforesaid first data file in tabular form, in which all false positives deriving from the events recognized as belonging to the third category, comprising higher-order harmonics, and/or all events recognized as belonging to the second category, comprising noise deriving from anomalies, are removed.

According to an embodiment of the method, when a noise event belonging to third category is identified, the method comprises the further step of generating a warning and/or alarm signal associated with the identified third category noise event.

According to an implementation option, if the identified noise event belongs to the abnormal noise sub-category due to imperfections of the test bench, the further step of stopping the current test and verifying the text bench is comprised.

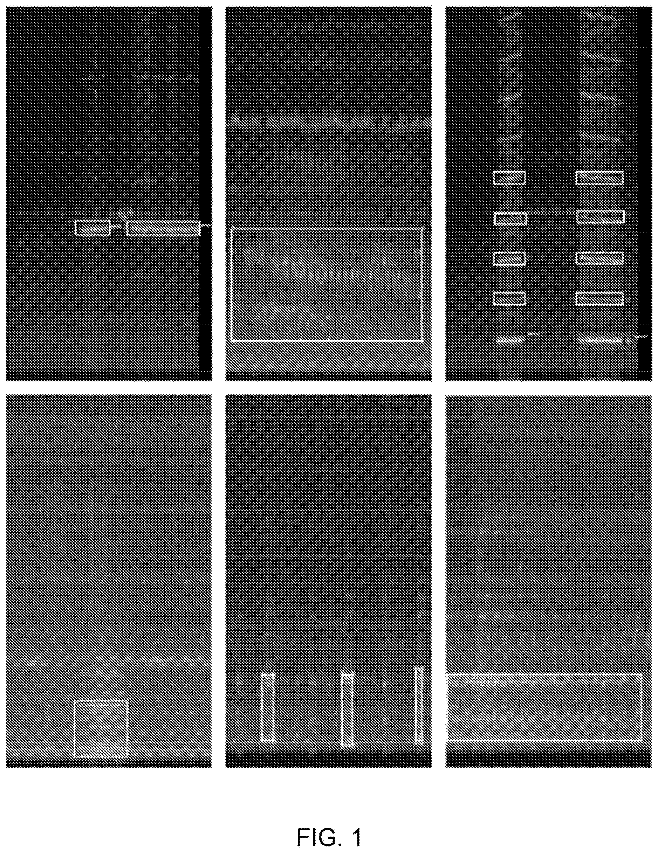

Further details of the method will be given below, referring to figures 1-11, for illustrative and non-limiting purposes only, according to a particular embodiment of the invention.

In this example, the noise generation is measured during the steps of development of a brake system by testing on a dynamometric test bench; during the dynamometric testing, a predefined braking sequence is applied in terms of operating parameters, such as rotational speed and braking pressure.

The noise is measured during the test by means of a noise analyzer, known in itself, installed on the bench itself.

A standard noise analyzer, configured to identify noise events based on amplitude criteria and/or spectral methods involving Fourier transforms, can be employed for this purpose. The output provided by the noise analyzer is a tabular data file, in which, for each braking event tested, relevant data inherent in the squeal events detected are listed, i.e., instant in time, frequency, maximum and average sound pressure, duration, and so on.

The data file may contain errors in the form of false positives.

In order to improve the measurement and/or detection quality, the frequency values associated with false positives must be removed.

In this regard, in the present invention, and in particular in the example of the embodiment described herein, artificial intelligence, Al, techniques are employed to check/verify all noise events recorded by the noise analyzer during a test and correct the original file (for example, by removing false positive), thereby enabling more reliable, repeatable and objective test results.

For example, "transfer learning" training techniques are employed to construct machine-learning algorithms, ML, i.e., for example, an algorithm pre-trained on another dataset.

As a further exemplification, with respect to the algorithms already mentioned above, it is worth noting that ML algorithms, known in themselves, can be used, including, for example, the "Mask-RCNN" model, based on neural networks (NN), which are, for example, trained using an open-source COCO dataset as the training dataset.

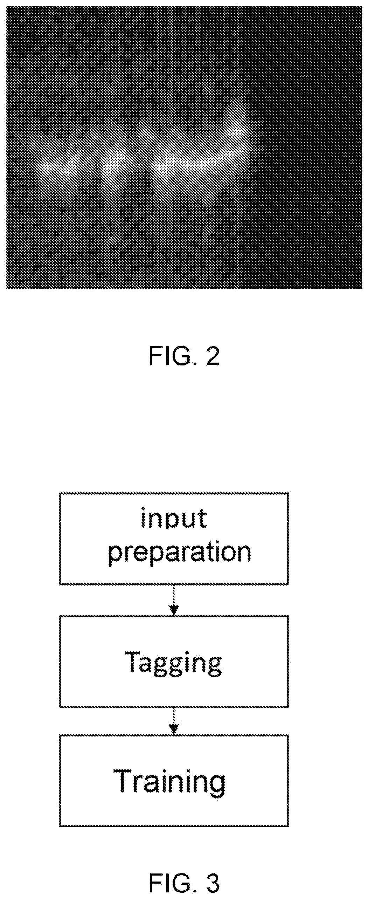

A typical flowchart of an ML algorithm involves the steps shown in figure 3: input preparation, tagging, and model training.

These steps are carried out, in the present invention, with peculiar features, especially concerning input preparation and tagging, to achieve improvements over the prior art, leading to an enriched/improved model of Al-based noise detection.

The step of input preparation comprises all the operations aimed at processing the numerical information contained in the output tabular file (provided by the noise analyzer) to obtain digital information suitable to be more effectively provided as input to an ML algorithm, e.g., a "deep learning" model.

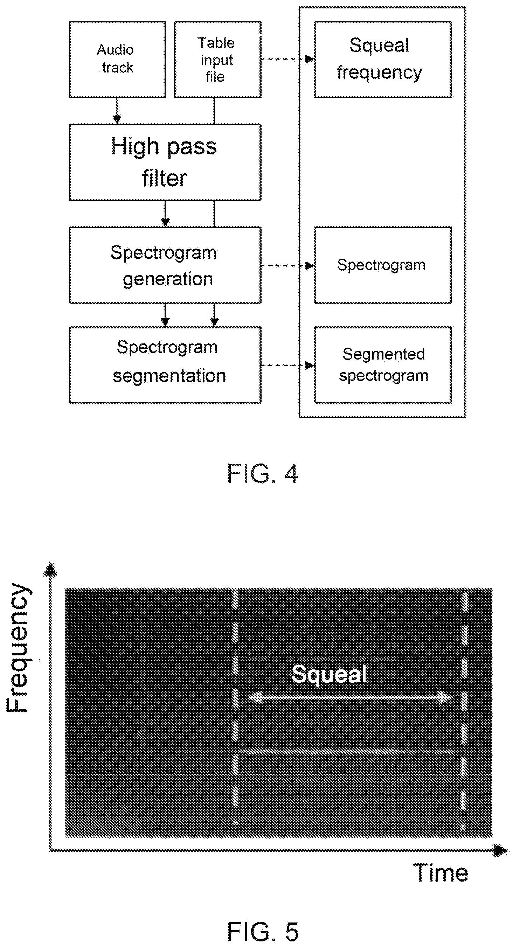

This is achieved, in the embodiment described here, by a series of steps, as illustrated for example in figure 4, and in particular by appropriately transforming sound data into digital images, which are more suitable for use as input to the ML algorithm.

Firstly, a high-pass filter is applied to each detected audio track to eliminate background noise at low frequencies (e.g., < 500 Hz), which could lead to a bias or shift in the color scale of the obtained digital image (also called a "spectrogram") which can have deleterious effects in subsequent processing steps.

From audio data manipulated as indicated above, a spectrogram, i.e., a graph of frequency as a function of time, colored according to the local intensity of the sound signal, is then generated for each braking event for each time-frequency point on the graph.

The spectrogram is shown in figure 5, for example.

According to an implementation option, to make the image more readable, an additional operation is performed, to highlight high and medium-intensity points, on the spectrogram, and make them stand out better from the background:
- all points with intensity greater than 50dB (high intensity) are colored with a vivid first color (e.g., pink);
- all points with higher intensity between 30 dB and 50dB (medium intensity) are colored with a second vivid color (e.g., dark red).

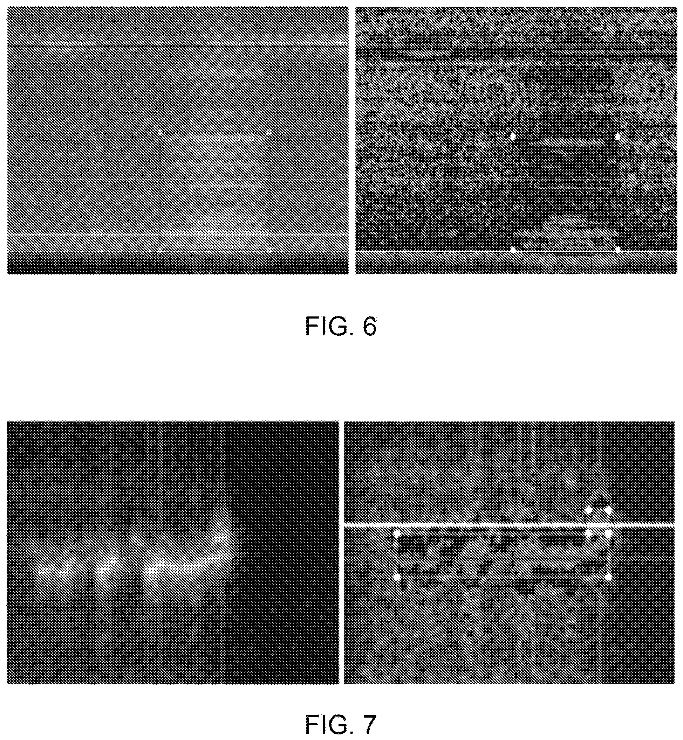

This is shown in figure 6, which depicts a spectrogram before segmentation (left) and after segmentation (right). The pink and dark red are rendered in figure 6 with respective lighter gray tones, compared to the background.

By setting the above two thresholds, two ranges in intensity are defined and displayed, representing an additional level of information (for the ML algorithm) about what the user considers important or not.

According to other implementation options, a plurality (thus any number greater than 2) of intensity segmentation intervals is defined by setting a plurality of respective thresholds, having defined a plurality of thresholds.

With reference to the step of "tagging" or labeling, according to an implementation option, it involves manual tagging of spectrograms. This step of "tagging" involves identifying predefined categories of sounds in the images (spectrograms). Accurate tagging of training images is an important pre-condition for achieving effective operation of the trained algorithm (e.g., "deep learning").

In this example, the noise categories considered are as follows (already mentioned and illustrated above):
- squeal, chirp/wirebrush, artifact;
- higher order harmonics;
- bench noise (i.e., abnormal noise indicating poor experimental arrangement);
- clang noise, which indicates problems in the design of the brake system.

How these categories appear in the spectrograms is depicted in figure 1: squeals in the upper left spectrogram, wirebrush in the upper center spectrogram, squeals with higher order harmonics in the upper right spectrogram, noise artifact in the lower left spectrogram, clang noise in the lower center spectrogram, and test bench noise in the lower right spectrogram.

A single-frequency squeal with variations in intensity is shown in figure 2.

Figure 5 shows a squeal in a spectrogram, with advantageous highlights.

The "tagging" operation is carried out, for example, by drawing a rectangle in the image and associating each rectangle with a respective label indicating one of the aforementioned noise categories.

According to a particular implementation option, the step of "tagging" is supported by facilitating/enabling software, such as the previously mentioned open-source tool "labellmg", which adds a few features.
(i) Firstly, the user can switch between a normal color spectrogram and a segmented spectrogram, depending on the type of coloring scheme which allows easier recognition of a given pattern on the image. Furthermore, the color segmentation facilitates the definition of shared rules for tagging noise events in images, thus making the process more objective and repeatable. For example, in the case of a single-frequency squeal with variation in intensity, the two thresholds defined for spectrogram segmentation make it possible to establish shared and unambiguous rules for determining whether the event being analyzed consists of a single squeal or a plurality of squeals, which are close to each other but distinct (see, for example, figure 7, which shows the same single-frequency squeal situation on a spectrogram without segmentation, on the left, and on a spectrogram with segmentation, on the right).
(ii) In addition, a further option of the implementation of the method involves the possibility of displaying the frequencies at which the noise analyzer recorded each squeal on the spectrogram. In the spectrogram coordinates, these frequency values correspond to horizontal lines drawn at different heights.
(iii) Moreover, a further option of implementation of the method provides the ability to listen to the audio track corresponding to the displayed spectrogram; thus, the audio supports the visual pattern recognition.

The aforesaid three options, especially when all of them are employed, help to increase the quality of tagging, and thus both the training and the full performance of the algorithm.

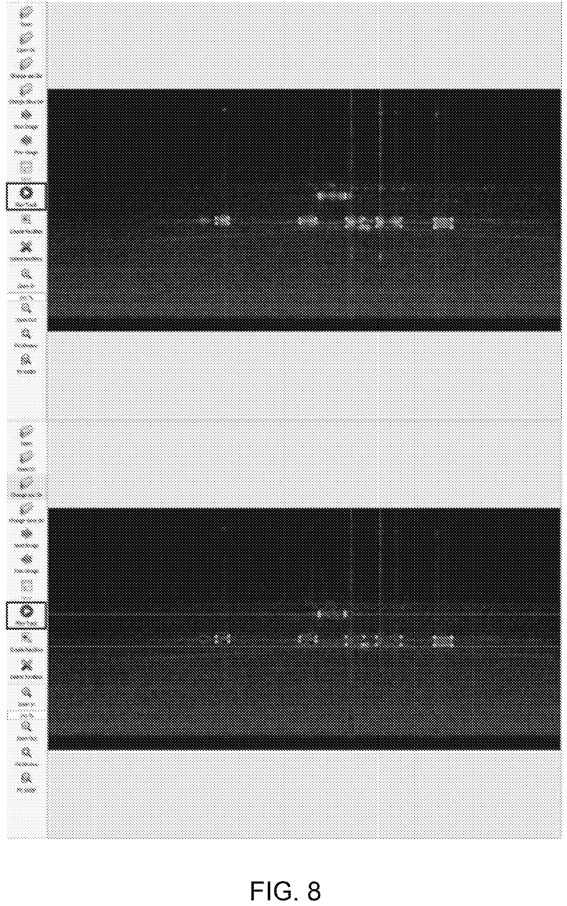

Reference is now made to figure 8, which shows a graphical user interface (GUI) of the "labellmg" tagging tool enhanced with the above features (i), (ii), (iii).

The step of tagging is followed by a training process, which in the example considered here is carried out in the following manner: a subset of the dataset on which the "tagging" was done (consisting of 1017 audio files) is provided as input to the Al algorithm to calibrate the model parameters and make them suitable for making predictions. For each braking event, the tagging-enriched data provided to the algorithm comprise three interrelated entities (as shown in figure 4): the spectrogram, the segmented spectrogram, and the set of frequencies at which the noise analyzer identified the squeals (the latter information can be extracted directly from the noise analyzer and included in its tabular output file).

In the embodiment described here, after the algorithm has been trained, its predictive capabilities are tested on another dataset of the same nature. When the algorithm identifies a noise other than a squeal (or no noise) with a confidence level that exceeds a certain preset threshold, a false positive emerges, i.e., an event recognized by the noise analyzer as a squeal, but which in fact is not.

At this point, the algorithm transfers the identified spectrogram information into the time, frequency, and intensity domains, and deletes the event under analysis from the initial file.

Once this processing is completed, the output file has the same header and structure as the original tabular file, but metrics related to squeals that have been recognized by the artificial intelligence, Al, as false positives are removed.

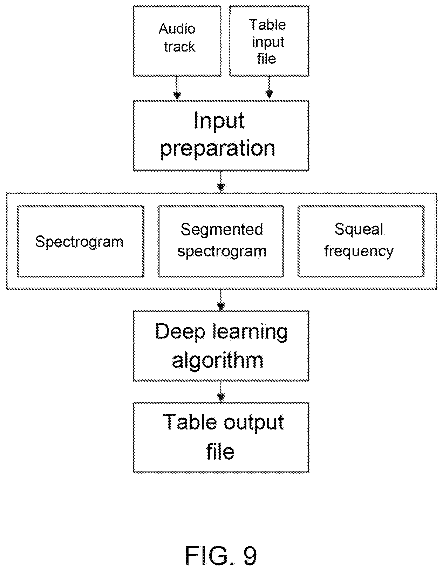

The overall flow chart of the aforesaid embodiment is shown in figure 9.

When a noise event is recognized as clang noise or test bench noise, during a test, according to an implementation option the method not only removes the corresponding frequency value from the tabular file but also issues a warning that there are noises that may be associated with anomalies that are potentially detrimental to the entire test.

If the test bench noise is identified and the test in which that noise was identified is still in progress, the operator may decide to stop the test or pause it, to allow for verification that the experimental bench is properly installed.

If the ML algorithm is run after the end of a test in which at least one test bench noise or collision noise has been reported, this information may prove particularly useful because it alerts the operator to unexpected or atypical results obtained during the analyzed test session.

In the implementation example described here, the tests were performed on the subset of datasets with complementary tagging to the subset employed during training.

The dataset test consisted of 270 audio files with a total of 683 squeal events, 29 chirp/wirebrush events, 20 clang noise events, and 42 noise artifact events.

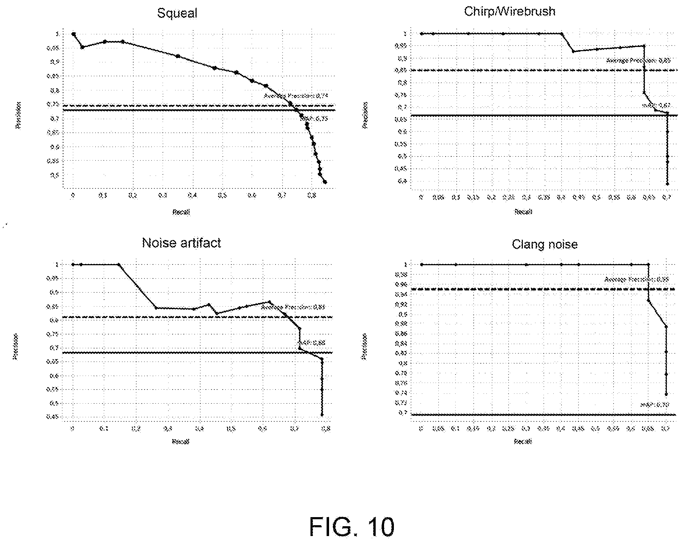

Precision-recall diagrams for the object detection task are depicted in figure 10 along with the corresponding mean precision (mAP) and accuracy over all the values of the recall curve (AP). The four diagrams in figure 10 refer to squeal in the upper left, chirp/wirebrush in the upper right, noise artifact in the lower left, and clang noise in the lower right. The intersection on union (IoU) used to determine matches between reality and prediction was set to 0.5.

With these performance levels and the addition of specific post-processing logic (e.g., removal of squeal harmonics at multiple frequencies according to integer numbers of the lowest frequency detected in the same time interval), it has been shown that the occurrence of false squeals can be reduced by 30% (from 35% to 5%) by introducing 4% of erroneous removals from the total number of proposed removals (i.e., increasing the false negative rate from 0% to 2%).

The removal of noises other than squeal is carried out in parallel during the dynamometric tests.

During the test, the audio files are recorded and saved when the occurrence of one or more squeals is recorded by the base system.

According to an implementation option, audio files and a partial squeal detection report are therefore sent to a centralized server for analysis. A squeal detection report is produced, in which false occurrences of squeals identified by the Al system were filtered out. This report, along with alerts regarding anomalies (i.e., the presence of bench noise or clang noise) are made available in a centralized repository.

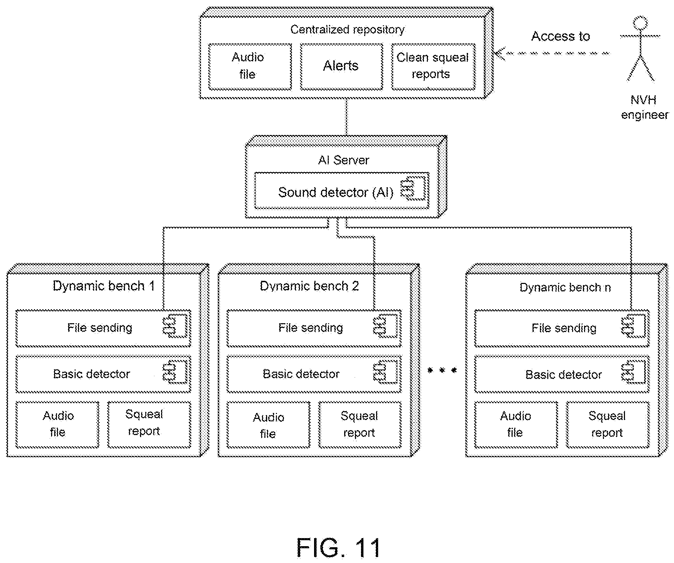

An embodiment of a system capable of implementing the above method, according to the invention, is shown in figure 11.

The components of the system illustrated in figure 11 are N dynamometric (or roller stand) test benches (in each of which audio files, a squeal report, a basic detector, and a file-sending block are shown), all connected to a centralized artificial intelligence (AI) server comprising a "noise detector" block, in which the machine-learning algorithm operates, which in turn is connected to a central repository, in which audio files, warnings/alerts, and corrected reports on the occurrence of squeals are stored.

As can be seen, the objects of the present invention as previously indicated are fully achieved by the method described above by virtue of the features disclosed above in detail. The advantages and technical problems solved by the method according to the invention were mentioned above, with reference to the various features and aspects of the method.

## Claims

1. A method for identifying and characterizing noises generated by a vehicle braking system, comprising the steps of:
- detecting noises generated by a vehicle braking system under dynamic operating conditions;
- generating digital audio data representative of the detected noise;
- analyzing said digital audio data by a noise analyzer, to identify potential squeal events and the respective likely squeal frequencies, and generating squeal frequency information indicative of the squeal frequencies of the identified potential squeal events;
**characterised by** the steps of:
- filtering said digital audio data by means of high-pass filtering to eliminate spectral components at frequencies lower than a filtering frequency, to generate filtered digital audio data;
- generating, based on said filtered digital audio data, a respective spectrogram, which represents, in graphical form, information present in the filtered digital audio data, comprising the sound signal intensity, as a function of time and frequency;
- providing said spectrogram and said squeal frequency information to a trained algorithm, wherein the algorithm was trained using artificial intelligence and/or machine learning techniques;
- identifying noise events, by said trained algorithm, based on said spectrogram and said squeal frequency information, and classifying the identified noise events according to at least the following categories:
- a first category comprising noises to be detected generated by the characteristic dynamic operation of the braking system;
- a second category comprising abnormal noises, generated by operational anomalies or test anomalies;
- providing information about the identified noise events, each **characterized by** the respective category.

2. A method according to claim 1, wherein said categories in which the noises are classified further comprise a third category comprising higher-order harmonics not deriving from physically generated noises.

3. A method according to claim 1 or claim 2, wherein said first category of noises comprises squeal noises and/or chirp/wirebrush noises and/or artifacts, i.e., noises having broad bandwidth in frequency and high intensity,
and wherein said step of classifying the identified noise events further comprises:
- recognizing and further classifying noises in the first category as belonging to one of the following sub-categories: squeal noises, chirp/wirebrush noises, artifacts.

4. A method according to any one of claims 1-3, wherein said step of classifying the identified noise events further comprises:
- recognizing and further classifying the noises of the second category as belonging to one of the sub-categories: abnormal noise due to imperfections of the test bench, or noises due to collisions between components of the braking system.

5. A method according to any one of the preceding claims, wherein the dynamic operating conditions of the braking system from which the noises are derived are test conditions, wherein a sequence of predefined test braking events **characterized by** predefined parameters is applied to the braking system, said predefined parameters comprising at least a predefined rotational speed and/or a predefined braking pressure,
wherein the steps of the method of claim 1 are performed at each test braking event.

6. A method according to any one of the preceding claims, wherein said trained algorithm is an algorithm trained by means of a preliminary step of training, based on a training dataset comprising spectrograms corresponding to known conditions and characterized according to said classification of noise into categories and/or sub-categories, desired as a result of the analysis,
wherein said spectrograms of the training dataset and information about the known classification of each noise event are provided as input to the algorithm to be trained.

7. A method according to claim 6, wherein said step of preliminary training comprises:
- tagging or labeling of the known noise events present in each of the training spectrograms;
- calibrating the parameters of the algorithm to be trained based on the training spectrograms processed by tagging or labeling.

8. A method according to claim 7, wherein said step of tagging or labeling is performed manually by drawing a rectangle on a pattern of the training spectrogram identified as a noise event and associating said rectangle with a label indicating the category and/or sub-category of the noise event, referred to said classification,
wherein:
said step of tagging or labeling is performed with the support of enabling software,
or said step of tagging or labeling is supported by listening to an audio file representative of the detected noise.

9. A method according to any one of claims 6-8, comprising the further step of:
- verifying the predictive capabilities of the trained algorithm on an additional dataset of tagged validation spectrograms.

10. A method according to any one of claims 6-9, wherein said trained algorithm is a neural-network-based machine learning algorithm,
wherein said neural networks comprise deep neural networks, or convolutional neural networks, or zoned convolutional neural networks or Region-Based Convolutional Neural Networks,
or wherein said trained algorithm is a machine learning algorithm based on Deep Object Detectors or Two-stage Deep Object Detectors.

11. A method according to any one of the preceding claims, comprising, in addition to the step of generating a spectrogram, the further step of generating a segmented spectrogram, in which the points are graphically highlighted in dependence of an intensity band to which they belong, within a plurality of intensity bands delimited by respective predetermined thresholds;
and wherein said segmented spectrogram is provided to the trained algorithm as an additional input, in addition to the unsegmented spectrogram and information of probable squeal frequencies.

12. A method according to claim 11, wherein said intensity bands, for which points are highlighted in a respective manner, comprise a high-intensity band, inferiorly delimited by a first threshold, a medium-intensity band, between said first threshold and a second threshold, below said first threshold, and a low-intensity band, below said second threshold.

13. A method according to any one of the preceding claims, wherein said step of generating digital audio data representative of the detected noise comprises generating files and/or audio tracks acquired while performing the test on the braking system,
and/or wherein the step of analyzing the audio digital data comprises:
- identifying noise events, and among them the squeal events, based on criteria associated with the intensity or amplitude and/or based on criteria associated with frequency by means of spectral methods, such as the Fourier transform;
- generating, by the noise analyzer, a first data file in tabular form in which there are recorded all the potential squeal events identified by the noise analyzer and, for each squeal event, the time instant in which it occurred, the duration, the respective squeal frequency, the maximum and/or average sound pressure and/or amplitude and/or sound intensity in the time instant; and wherein said squeal frequency information is obtained from said first data file in tabular form.

14. A method according to any one of the preceding claims, wherein said step of providing information about the identified squeal events comprises generating, based on the results of the processing by trained algorithm, a second data file in tabular form in which there are recorded all the squeal events identified by the trained algorithm and, for each squeal event, the time instant in which it occurred, the duration, the respective squeal frequency, the maximum and/or average sound pressure and/or amplitude and/or sound intensity in the time instant,
wherein said second data file in tabular form is a refinement of said first data file in tabular form, wherein all false positives deriving from the events recognized as belonging to the third category, comprising higher-order harmonics, and/or all events recognized as belonging to the second category, comprising noise deriving from anomalies, are removed.

15. A method according to any one of the preceding claims, wherein when a noise event belonging to the second category is identified, the method comprises the further step of generating a warning and/or alarm signal associated with the identified second category noise event.
and/or wherein, if the identified noise event belongs to the sub-category abnormal noise due to imperfections of the test bench, the further step of stopping the current test and verifying the text bench is comprised.

## Patentansprüche

1. Verfahren zur Identifizierung und Charakterisierung von Geräuschen, die von einem Fahrzeugbremssystem erzeugt werden, umfassend die folgenden Schritte:
- Erkennen Geräuschen, die von einem Fahrzeugbremssystem unter dynamischen Betriebsbedingungen erzeugt werden;
- Erzeugen digitaler Audiodaten, die das erkannte Geräusch darstellen;
- Analysieren der digitalen Audiodaten mittels eines Geräuschanalysators zur Identifizierung potenzieller Quietschen-Ereignisse und der jeweiligen wahrscheinlichen Quietschen-Frequenzen sowie Erzeugen Quietschen-Frequenzinformationen, die die Quietschen-Frequenzen der identifizierten potenziellen Quietschen-Ereignisse anzeigen;
**gekennzeichnet durch** die folgenden Schritte:
- Filtern der digitalen Audiodaten mittels Hochpassfilterung zum Entfernen spektraler Komponenten bei Frequenzen, die niedriger als eine Filterfrequenz sind, um gefilterte digitale Audiodaten zu erzeugen;
- Erzeugen, basierend auf den gefilterten digitalen Audiodaten, eines jeweiligen Spektrogramms, wobei das Spektrogramm grafisch Informationen in den gefilterten digitalen Audiodaten darstellt, einschließlich der Intensität des Tonsignals in Abhängigkeit von Zeit und Frequenz;
- Bereitstellen des Spektrogramms und der Quietschen-Frequenzinformationen an einen trainierten Algorithmus, wobei der Algorithmus mittels Techniken der künstlichen Intelligenz und/oder des maschinellen Lernens trainiert wurde;
- Identifizieren Geräuschereignissen **durch** den trainierten Algorithmus, basierend auf dem Spektrogramm und den Quietschen-Frequenzinformationen und Klassifizieren der identifizierten Geräuschereignisse nach mindestens den folgenden Kategorien:
- einer ersten Kategorie umfassend zu erkennende Geräusche, die **durch** den charakteristischen dynamischen Betrieb des Bremssystems erzeugt werden;
- einer zweiten Kategorie umfassend abnormale Geräusche, die **durch** Betriebsanomalien oder Testanomalien erzeugt werden;
- Bereitstellen Informationen über die identifizierten Geräuschereignissen, wobei jedes **durch** die jeweilige Kategorie gekennzeichnet ist.

2. Verfahren nach Anspruch 1, wobei die Kategorien, in die die Geräusche klassifiziert werden, ferner eine dritte Kategorie umfassen, die Harmonischen höherer Ordnung umfasst, die nicht aus physisch erzeugten Geräuschen gewonnen werden.

3. Verfahren nach Anspruch 1 oder 2, wobei die erste Geräuschkategorie Quietschen-Geräusche und/oder Quietschen/Drahtbürsten Geräusche und/oder Artefakte umfasst, d. h. Geräusche, die eine größere Frequenzbandbreite und eine hohe Intensität aufweisen,
und wobei der Schritt des Klassifizierens der identifizierten Geräuschereignisse ferner umfasst:
- Erkennen und ferner Klassifizieren der Geräusche in der ersten Kategorie als Geräusche, die zu einer der folgenden Unterkategorien: Quietschen-Geräusche, Quietschen/Drahtbürsten Geräusche, Artefakte gehören.

4. Verfahren nach einem der Ansprüche 1 bis 3, wobei der Schritt des Klassifizierens der identifizierten Geräuschereignisse ferner umfasst:
- Erkennen und ferner Klassifizieren der Geräusche der zweiten Kategorie als Geräusche, die zu einer der Unterkategorien: abnormales Geräusch aufgrund von Unregelmäßigkeiten des Prüfstands oder Geräusche durch Kollisionen zwischen Komponenten des Bremssystems gehören.

5. Verfahren nach einem der vorhergehenden Ansprüche, wobei die dynamischen Betriebsbedingungen des Bremssystems, aus denen die Geräusche gewonnen werden, Testbedingungen sind, wobei eine Sequenz vordefinierter Testbremsereignisse, die durch vordefinierte Parametern charakterisiert sind, auf das Bremssystem angewendet wird, wobei die vordefinierten Parameter mindestens eine vordefinierte Drehgeschwindigkeit und/oder einen vordefinierten Bremsdruck umfassen,
wobei die Schritte des Verfahrens nach Anspruch 1 bei jedem Testbremsereignis durchgeführt werden.

6. Verfahren nach einem der vorhergehenden Ansprüche, wobei der trainierte Algorithmus ein Algorithmus ist, der mittels eines vorläufigen Trainingsschritts, basierend auf einem Trainingsdatensatz trainiert wurde, der Spektrogramme umfasst, die bekannten Bedingungen entsprechen und nach der Klassifikation von Geräuschen in Kategorien und/oder Unterkategorien charakterisiert sind, wie als Analyseergebnis gewünscht ist,
wobei die Spektrogramme des Trainingsdatensatzes und Informationen über die bekannte Klassifikation jedes Geräuschereignisses dem zu trainierenden Algorithmus als Eingabe bereitgestellt werden.

7. Verfahren nach Anspruch 6, wobei der vorbereitende Trainingsschritt umfasst:
- Markieren oder Beschriften der bekannten Geräuschereignisse, die in jedem Trainingsspektrogramm vorhanden sind;
- Kalibrieren der Parameter des zu trainierenden Algorithmus basierend auf den Trainingsspektrogramme, die durch Markierung oder Beschriftung verarbeitet wurden.

8. Verfahren nach Anspruch 7, wobei der Schritt des Markierens oder Beschriftens manuell durchgeführt wird, indem ein Rechteck über ein Muster des Trainingsspektrogramms, das als Geräuschereignis identifiziert wird, gezeichnet wird und das Rechteck einem Etikett zugeordnet wird, das die Kategorie und/oder Unterkategorie des Geräuschereignisses, bezugnehmend auf die Klassifikation, angibt,
wobei:
der Schritt des Markierens oder Beschriftens mit Hilfe einer entsprechenden Software durchgeführt wird,
oder der Schritt des Markierens oder Beschriftens durch das Hören einer Audiodatei, die das erkannte Geräusch darstellt, unterstützt wird.

9. Verfahren nach einem der Ansprüche 6 bis 8, umfassend den weiteren Schritt:
- Überprüfen der Vorhersagefähigkeiten des trainierten Algorithmus anhand eines zusätzlichen Datensatzes von markierten Validierungsspektrogrammen.

10. Verfahren nach einem der Ansprüche 6 bis 9, wobei der trainierte Algorithmus ein Maschinelles Lernen-Algorithmus ist, der auf neuronalen Netzen basiert,
wobei die neuronalen Netze tiefe neuronale Netze, oder konvolutionale neuronale Netze, oder konvolutionale neuronale Netze, die in Zonen aufgeteilt sind oder regionenbezogene konvolutionale neuronale Netze umfassen,
oder wobei der trainierte Algorithmus ein Maschinelles Lernen-Algorithmus ist, der auf Deep Object Detectors oder Two-stage Deep Object Detectors basiert.

11. Verfahren nach einem der vorhergehenden Ansprüche umfassend, neben dem Schritt des Erzeugens eines Spektrogramms, den weiteren Schritt des Erzeugens eines segmentierten Spektrogramms, in dem die Punkte grafisch abhängig von einem Intensitätsbereich, zu dem sie gehören, innerhalb einer Vielzahl von Intensitätsbereichen, die durch jeweilige vordefinierte Schwellenwerte begrenzt werden, hervorgehoben werden;
und wobei das segmentierte Spektrogramm dem trainierten Algorithmus als zusätzliche Eingabe neben dem unsegmentierten Spektrogramm und den Informationen über die wahrscheinlichen Quietschen-Frequenzen bereitgestellt wird.

12. Verfahren nach Anspruch 11, wobei die Intensitätsbereiche, für die die Punkte jeweils hervorgehoben werden, einen Hochintensitätsbereich, der durch einen ersten Schwellenwert nach unten begrenzt wird, einen Mittelintensitätsbereich zwischen dem ersten Schwellenwert und einem zweiten Schwellenwert, der unter des ersten Schwellenwerts liegt, und einen Niederintensitätsbereich, der unter des zweiten Schwellenwerts liegt, umfassen.

13. Verfahren nach einem der vorhergehenden Ansprüche, wobei der Schritt des Erzeugens digitaler Audiodaten, die das erkannte Geräusch darstellen, Erzeugen Dateien und/oder Audiospuren umfasst, die während der Durchführung des Tests an dem Bremssystem erfasst wurden,
und/oder wobei der Schritt des Analysierens der digitalen Audiodaten umfasst:
- Identifizieren Geräuschereignissen, darunter Quietschen-Ereignisse, basierend auf Kriterien, die mit Intensität oder Amplitude zugeordnet sind und/oder basierend auf Kriterien, die mit Frequenz zugeordnet sind, mittels spektraler Verfahren, wie der Fouriertransformation;
- Erzeugen, durch den Geräuschanalysator, einer ersten Datendatei in Tabellenform, in der alle potenziellen Quietschen-Ereignisse, die durch den Geräuschanalysator identifiziert wurden, und für jedes Quietschen-Ereignis der Zeitpunkt seines Auftretens, die Dauer, die jeweilige Quietschen-Frequenz, der maximale und/oder durchschnittliche Schalldruck und/oder die Amplitude und/oder die Schallintensität in dem Zeitpunkt eingetragen sind; und wobei die Quietschen-Frequenzinformationen aus der ersten Datendatei in Tabellenform gewonnen werden.

14. Verfahren nach einem der vorhergehenden Ansprüche, wobei der Schritt des Bereitstellens Informationen über die identifizierten Quietschereignissen Erzeugen, basierend auf den Verarbeitungsergebnissen durch den trainierten Algorithmus, einer zweiten Datendatei in Tabellenform umfasst, in der alle Quietschen-Ereignisse, die vom trainierten Algorithmus identifiziert wurden, eingetragen werden und für jedes Quietschen-Ereignis der Zeitpunkt seines Auftretens, die Dauer, die jeweilige Quietschen-Frequenz, der maximale und/oder durchschnittliche Schalldruck und/oder die Amplitude und/oder die Schallintensität in dem Zeitpunkt eingetragen werden,
wobei die zweite Datendatei in Tabellenform eine Verbesserung der ersten Datendatei in Tabellenform ist, in der alle Fehlalarme, die aus Ereignissen resultieren, die als zur dritten Kategorie gehörende Ereignisse erkannt wurden, umfassend Harmonischen, und/oder alle Ereignisse, die als zur zweiten Kategorie gehörende Ereignisse erkannt wurden, umfassend Geräusche, die aus Anomalien resultieren, entfernt wurden.

15. Verfahren nach einem der vorhergehenden Ansprüche, wobei, wenn ein Geräuschereignis, das zur zweiten Kategorie gehört, identifiziert wird, das Verfahren den weiteren Schritt des Erzeugen ein Warn- und/oder Alarmsignal umfasst, das dem identifizierten Geräuschereignis der zweiten Kategorie zugeordnet ist,
und/oder wobei, wenn das identifizierte Geräuschereignis zur Unterkategorie des abnormalen Geräusches durch Unregelmäßigkeiten des Prüfstands gehört, den weiteren Schritt des Stoppen den aktuellen Test und des Überprüfen den Prüfstand umfasst.

## Revendications

1. Procédé d'identification et de caractérisation des bruits générés par un système de freinage de véhicule, comprenant les étapes consistant à :
- détecter des bruits générés par un système de freinage de véhicule dans des conditions de fonctionnement dynamiques ;
- générer des données audio numériques représentatives du bruit détecté ;
- analyser lesdites données audio numériques au moyen d'un analyseur de bruit, afin d'identifier des événements potentiels de crissement ainsi que les fréquences de crissement probables respectives, et générer des informations de fréquence de crissement représentatives des fréquences de crissement des événements de crissement potentiels identifiés ;
**caractérisé par** les étapes consistant à :
- filtrer lesdites données audio numériques au moyen d'un filtrage passe-haut afin d'éliminer les composantes spectrales aux fréquences inférieures à une fréquence de filtrage, pour générer des données audio numériques filtrées ;
- générer, sur la base desdites données audio numériques filtrées, un spectrogramme respectif, lequel représente, sous forme graphique, des informations présentes dans les données audio numériques filtrées, comprenant l'intensité du signal sonore, en fonction du temps et de la fréquence ;
- fournir ledit spectrogramme et lesdites informations de fréquence de crissement à un algorithme entraîné, l'algorithme ayant été entraîné à l'aide de techniques d'intelligence artificielle et/ou d'apprentissage automatique ;
- identifier des événements de bruit, au moyen dudit algorithme entraîné, sur la base dudit spectrogramme et desdites informations de fréquence de crissement, et classifier les événements de bruit identifiés selon au moins les catégories suivantes :
- une première catégorie comprenant des bruits à détecter générés par le fonctionnement dynamique caractéristique du système de freinage ;
- une deuxième catégorie comprenant des bruits anormaux, générés par des anomalies de fonctionnement ou des anomalies de test ;
- fournir des informations relatives aux événements de bruit identifiés, chacun étant **caractérisé par** la catégorie respective.

2. Procédé selon la revendication 1, dans lequel lesdites catégories dans lesquelles les bruits sont classifiés comprennent en outre une troisième catégorie comprenant des harmoniques d'ordre supérieur ne provenant pas de bruits générés physiquement.

3. Procédé selon la revendication 1 ou la revendication 2, dans lequel ladite première catégorie de bruits comprend des bruits de crissement et/ou des bruits de type "chirp"/"brosse métallique" et/ou des artéfacts, c'est-à-dire des bruits ayant une large bande passante en fréquence et une intensité élevée,
et dans lequel ladite étape de classification des événements de bruit identifiés comprend en outre :
- la reconnaissance et la classification supplémentaire des bruits dans la première catégorie comme appartenant à l'une des sous-catégories suivantes : bruits de crissement, bruits de type "chirp"/"brosse métallique", artéfacts.

4. Procédé selon l'une quelconque des revendications 1 à 3, dans lequel ladite étape de classification des événements de bruit identifiés comprend en outre :
- la reconnaissance et la classification supplémentaire des bruits de la deuxième catégorie comme appartenant à l'une des sous-catégories : bruit anormal dû à des imperfections du banc d'essai, ou bruits dus à des collisions entre composants du système de freinage.

5. Procédé selon l'une quelconque des revendications précédentes, dans lequel les conditions de fonctionnement dynamiques du système de freinage à partir desquelles les bruits sont dérivés sont des conditions de test, dans lesquelles une séquence d'événements de freinage de test prédéfinis, **caractérisés par** des paramètres prédéfinis, est appliquée au système de freinage, lesdits paramètres prédéfinis comprenant au moins une vitesse de rotation prédéfinie et/ou une pression de freinage prédéfinie,
les étapes du procédé selon la revendication 1 étant réalisées à chaque événement de freinage de test.

6. Procédé selon l'une quelconque des revendications précédentes, dans lequel ledit algorithme entraîné est un algorithme entraîné au moyen d'une étape préliminaire d'entraînement, sur la base d'un ensemble de données d'entraînement comprenant des spectrogrammes correspondant à des conditions connues et caractérisés selon ladite classification des bruits en catégories et/ou sous-catégories, souhaitée comme résultat de l'analyse,
dans lequel lesdits spectrogrammes de l'ensemble de données d'entraînement et les informations relatives à la classification connue de chaque événement de bruit sont fournis en entrée à l'algorithme à entraîner.

7. Procédé selon la revendication 6, dans lequel ladite étape d'entraînement préliminaire comprend :
- l'annotation ou l'étiquetage des événements de bruit connus présents dans chacun des spectrogrammes d'entraînement ;
- le calibrage des paramètres de l'algorithme à entraîner sur la base des spectrogrammes d'entraînement traités par annotation ou étiquetage.

8. Procédé selon la revendication 7, dans lequel ladite étape d'annotation ou d'étiquetage est réalisée manuellement en traçant un rectangle sur un motif du spectrogramme d'entraînement identifié comme événement de bruit et en associant ledit rectangle à une étiquette indiquant la catégorie et/ou la sous-catégorie de l'événement de bruit, selon ladite classification,
dans lequel :
ladite étape d'annotation ou d'étiquetage est réalisée avec le support d'un logiciel dédié,
ou ladite étape d'annotation ou d'étiquetage est accompagnée de l'écoute d'un fichier audio représentatif du bruit détecté.

9. Procédé selon l'une quelconque des revendications 6 à 8, comprenant l'étape supplémentaire consistant à :
- vérifier les capacités prédictives de l'algorithme entraîné sur un ensemble de données supplémentaire constitué de spectrogrammes de validation étiquetés.

10. Procédé selon l'une quelconque des revendications 6 à 9, dans lequel ledit algorithme entraîné est un algorithme d'apprentissage automatique basé sur un réseau de neurones,
dans lequel lesdits réseaux de neurones comprennent des réseaux de neurones profonds, ou des réseaux de neurones convolutifs, ou des réseaux de neurones convolutifs zonés ou des réseaux de neurones convolutifs à base de régions (Region-Based Convolutional Neural Networks),
ou dans lequel ledit algorithme entraîné est un algorithme d'apprentissage automatique basé sur des détecteurs profonds d'objets (Deep Object Detectors) ou sur des détecteurs profonds d'objets à deux étapes (Two-stage Deep Object Detectors).

11. Procédé selon l'une quelconque des revendications précédentes, comprenant, en plus de l'étape de génération d'un spectrogramme, l'étape supplémentaire consistant à générer un spectrogramme segmenté, dans lequel les points sont mis en évidence graphiquement en fonction d'une bande d'intensité à laquelle ils appartiennent, parmi une pluralité de bandes d'intensité délimitées par des seuils prédéterminés respectifs ;
et dans lequel ledit spectrogramme segmenté est fourni à l'algorithme entraîné comme entrée supplémentaire, en plus du spectrogramme non segmenté et des informations sur les fréquences probables de crissement.

12. Procédé selon la revendication 11, dans lequel lesdites bandes d'intensité, pour lesquelles les points sont mis en évidence de manière respective, comprennent une bande d'intensité élevée, délimitée inférieurement par un premier seuil, une bande d'intensité moyenne, comprise entre ledit premier seuil et un second seuil, inférieur audit premier seuil, et une bande d'intensité faible, située au-dessous dudit second seuil.

13. Procédé selon l'une quelconque des revendications précédentes, dans lequel ladite étape de génération de données audio numériques représentatives du bruit détecté comprend la génération de fichiers et/ou de pistes audio acquises lors de l'exécution du test sur le système de freinage,
et/ou dans lequel l'étape d'analyse des données audio numériques comprend :
- l'identification d'événements de bruit, et parmi eux les événements de crissement, sur la base de critères associés à l'intensité ou à l'amplitude et/ou sur la base de critères associés à la fréquence au moyen de méthodes spectrales, telles que la transformée de Fourier;
- la génération, par l'analyseur de bruit, d'un premier fichier de données sous forme tabulaire dans lequel sont enregistrés tous les événements de crissement potentiels identifiés par l'analyseur de bruit et, pour chaque événement de crissement, l'instant auquel il s'est produit, la durée, la fréquence de crissement respective, la pression acoustique maximale et/ou moyenne et/ou l'amplitude et/ou l'intensité sonore à l'instant temporel ; et dans lequel lesdites informations de fréquence de crissement sont obtenues à partir dudit premier fichier de données sous forme tabulaire.

14. Procédé selon l'une quelconque des revendications précédentes, dans lequel ladite étape de fourniture d'informations relatives aux événements de crissement identifiés comprend la génération, sur la base des résultats du traitement par l'algorithme entraîné, d'un second fichier de données sous forme tabulaire dans lequel sont enregistrés tous les événements de crissement identifiés par l'algorithme entraîné et, pour chaque événement de crissement, l'instant auquel il s'est produit, la durée, la fréquence de crissement respective, la pression acoustique maximale et/ou moyenne et/ou l'amplitude et/ou l'intensité sonore à l'instant temporel,
dans lequel ledit second fichier de données sous forme tabulaire est un affinage dudit premier fichier de données sous forme tabulaire, dans lequel toutes les fausses détections provenant des événements reconnus comme appartenant à la troisième catégorie, comprenant des harmoniques d'ordre supérieur, et/ou tous les événements reconnus comme appartenant à la deuxième catégorie, comprenant des bruits provenant d'anomalies, sont supprimés.

15. Procédé selon l'une quelconque des revendications précédentes, dans lequel, lorsqu'un événement de bruit appartenant à la deuxième catégorie est identifié, le procédé comprend l'étape supplémentaire consistant à générer un signal d'avertissement et/ou d'alarme associé à l'événement de bruit de deuxième catégorie identifié,
et/ou dans lequel, si l'événement de bruit identifié appartient à la sous-catégorie de bruit anormal dû à des imperfections du banc d'essai, l'étape supplémentaire consistant à arrêter le test en cours et à vérifier le banc d'essai est comprise.
